# EUROPÄISCHE PATENTSCHRIFT

(11) **EP 0 811 276 B1**
(45) Veröffentlichungstag und Bekanntmachung des Hinweises auf die Patenterteilung: **15.12.1999**
(21) Anmeldenummer: 96901257.4
(22) Anmeldetag: 11.01.1996
(51) Int. Cl.: H04B 3/56

(54) **VERFAHREN UND SCHALTUNGSANORDNUNG ZUM ANSCHLIESSEN EINER LAST AN EINE LEITUNG**
PROCESS AND CIRCUIT ARRANGEMENT FOR CONNECTING A LOAD TO A CONDUCTOR
PROCEDE ET MONTAGE PERMETTANT DE RELIER UNE CHARGE A UN CONDUCTEUR

(30) Priorität: 21.02.1995 DE 19505956
(43) Veröffentlichungstag der Anmeldung: 10.12.1997
(73) Patentinhaber: Richard Hirschmann GmbH & Co., 72654 Neckartenzlingen (DE)
(72) Erfinder: SIEGWARTH, Martin, D-73730 Esslingen (DE)
(74) Vertreter: Stadler, Heinz, Dipl.-Ing.
(86) Internationale Anmeldenummer: EP9600097
(87) Internationale Veröffentlichungsnummer: WO9626577

(56) Entgegenhaltungen:
- EP-A- 0 355 532
- US-A- 4 903 006

## Beschreibung

Die Erfindung betrifft ein Verfahren nach dem Oberbegriff des Anspruches 1 sowie eine Schaltungsanordnung nach dem Oberbegriff des Anspruches 5.

Ein Verfahren und eine Schaltungsanordnung dieser Art ist in Zusammenhang mit zweiadrigen Busleitungen bekannt, wobei eines dieser Bussysteme, das sogenannte Aktuator-Sensor-Interface-Bussystem, abgekürzt ASI-Bussystem ist. An dem ASI-Bus sind Sensoren, wie z.B. Lichtschranken, Näherungsschalter usw., angeschlossen, deren Signale bzw. deren daraus abgeleitete Informationen an ein Mastergerät und von diesem an Aktuatoren, wie Magnetventile, Hubmagnete usw., über den Bus weitergeleitet werden. Sämtliche Systemkomponenten wie das Mastergerät, das Netzteil, die Sensor- und Aktuatorelektronik sind ausschließlich durch die ASI-Busleitung verbunden, die in beliebiger Weise zu den verschiedenen Systemenkomponenten verzweigbar ist. Über die beiden Adern der Busleitung werden nicht nur die Datensignale zwischen dem Mastergerät und den Sensoren bzw. den Aktuatoren übertragen, sondern auch die Sensoren und Aktuatoren mit der erforderlichen Betriebsenergie versorgt.

Um die Verdrahtung so einfach wie möglich zu gestalten, ist das Kabel für den ASI-Bus eine einfache, ungeschirmte Zweidrahtleitung. Die Datensignale werden symmetrisch auf die Leitung aufmoduliert. Durch diese Symmetrie wird das Bussystem durch Einstrahlung fremder elektromagnetischer Felder auf das Kabel nicht von Störungen beinflußt. Darüber hinaus ist durch die Leitungssymmetrie die Abstrahlung elektromagnetischer Störungen durch das Kabel auf Grund der hohen Frequenzen der Datensignale unterbunden.

Die an das ASI-Bussystem angeschlossenen Sensoren und Aktuatoren sowie deren eingebaute Elektronik beeinflussen die Symmetrie des Bussystems dann nicht, wenn die beiden Busleitungen keine Verbindungen z.B. zum Gehäuse haben und die kapazitive Belastung beider Adern etwa gleich ist.

Die von den Herstellern angebotenen Sensoren und Aktuatoren weisen in den meisten Fällen einen Zwei- oder Drei-Leiteranschluß zur Verbindung mit einer Steuereinheit auf. Sogenannte "binäre Sensoren" sind daher nicht zum Anschluß an das ASI-Bussystem geeignet und vorbereitet. Zum Anschluß dieser Komponenten an das ASI-Bussystem werden jedoch sogenannte Anwendermodule angeboten, die die Businformationen in binäre Signale umsetzen und umgekehrt, d.h. - im Falle von Aktuatoren - die für den jeweiligen Aktuator bestimmten Datent aus dem Bus auskoppeln und in Steuersignale umwandeln. Die Sensoren und Aktuatoren sind an diese Anwendermodule in der üblichen Gleichspannungstechnik anschließbar.

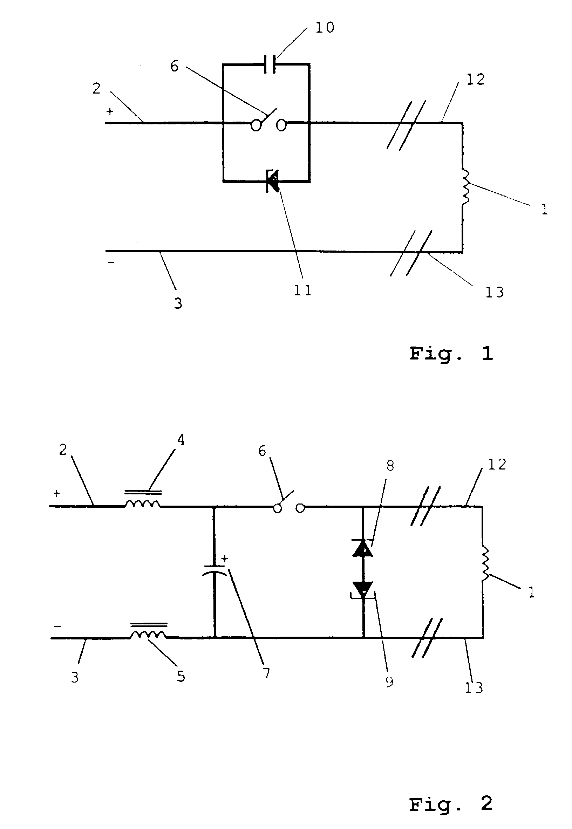

Ein Beispiel für eine Schaltungsanordnung in einem derartigen Anwendermodul ist in Fig. 2 für den Anschluß eines stets eine Spule 1 mit hoher Induktivität aufweisenden Aktuators, beispielsweise eines Magnetventils, schematisch dargestellt. In der Plus- und Minus-Ader 2, 3 der Busleitung ist jeweils eine Drossel 4, 5 vorgesehen. Die Drossel 4 der Plus-Ader 2 liegt über einen Schalter 6 an einem Anschluß der Spule 1 und die Drossel 5 ist direkt mit dem anderen Anschluß der Spule 1 verbunden. Zwischen den der Spule 1 zugewandten Anschlüssen der Drosseln 4 und 5 liegt ein Elektrolytkondensator 7 und auf der anderen Seite des Schalters 6 liegt der Spule 1 eine Diode 8 und eine Zenerdiode 9 parallel, wobei die Anoden der Dioden 8, 9 miteinander verbunden sind.

Die Drosseln 4, 5 dienen der Entkopplung der Datensignale von der Betriebsspannung in beiden Adern 2, 3 der Busleitung. Der Elektrolytkondensator 7 bewirkt, daß der Busstrom beim Ein- und Ausschalten des Aktuators keinen zu hohen Stromgradienten, d.h. keinen zu hohen Wert di/dt, aufweist.

Die Sensoren stellen normalerweise eine kleine ohmsche oder kapazitive Last dar, und daher kann das Anwendermodul eine solch geringe Belastung leicht verkraften. Dagegen ist der für die Aktuatoren erforderliche Strom naturgemäß erheblich höher als der Strom für die Sensoren. Der Schalter 6, üblicherweise ein Relaisschalter, ist zum Anschalten des Aktuators erforderlich und zwischen dem Aktuator und dem Elektrolytkondensator angeordnet, damit der Busstrom beim Ein- und Ausschalten des Aktuators keine zu hohen di/dt-Werte erreicht. Da dieser höhere Strom durch die Drosseln 4, 5 des Anwendermoduls fließt, müssen diese relativ groß dimensioniert werden. Lasten über etwa 2,5 Watt können auch aus einem vergrößerten Anwendermodul-Gehäuse nicht mit elektrischer Energie aus dem Bus versorgt werden, sondern sind auf eine Fremdspannungsquelle angewiesen, die zusätzlich am Anwendermodul angeschlossen werden muß.

Die gleiche Beurteilung gilt auch für eine aus der EP-A-355 532 bereits bekannten Schaltungsanordnung, sofern an die als Anwendermodule im vorstehenden Sinne anzusehenden Geräte STn Aktuatoren angeschlossen werden.

Der Erfindung liegt die Aufgabe zugrunde, ein Verfahren und eine Schaltungsanordnung anzugeben, das bzw. die eine wesentlich einfachere und kostengünstigere Schaltungsanordnung sowie kleinere Gehäuse für Anwendermodule ermöglicht.

Die gestellte Aufgabe wird bei einem Verfahren der eingangs genannten Art dadurch gelöst, daß die Induktivität des Aktuators als Entkopplungsdrossel benutzt wird.

Praktisch alle Aktuatoren weisen eine kleine Kapazität, jedoch eine große Induktivität auf, wie dies beispielsweise bei Hubmagneten, Magnetventilen usw. der Fall ist. Diese Induktivität ist größer, teilweise sogar um ein Vielfaches größer als die der Entkopplungsdrosseln herkömmlicher Anwendermodule. Daher kann auf diese Entkopplungsdrosseln im Anwendermodul mit dem Vorteil verzichtet werden, daß die Schaltungsanordnung weniger aufwendig ist, keine Verluste auf Grund der Entkopplungsdrosseln auftreten und kleinere Gehäuse einsetzbar sind. Verbraucher wie Aktuatoren mit einer relativ hohen Induktivität sind also bei Verwendung des erfindungsgemäßen Verfahrens ohne Entkopplungsdrosseln an das ASI-Bussystem anschließbar. Auch ein Elektrolytkondensator ist entbehrlich.

Gemäß einer vorteilhaften Ausgestaltung der Erfindung ist die Leitung zwischen Anwendermodul und Aktuator eine zweiadrige, symmetrische Busleitung. Bei leitendem Schalter liegt der Aktuator direkt am Bus. Durch den Aktuator fließt wegen seiner hohen Induktivität nur ein Gleichstrom. Der Bus wird daher nicht unzulässig belastet.

Bei geöffnetem Schalter ist nur eine der beiden Adern der Busleitung des ASI-Bussystems am Aktuator angeschlossen, wodurch der Bus stark unsymmetrisch belastet würde. Durch ein wechselstrommäßiges Überbrücken des Schalters mit einer kleinen Kapazität, die für die hochfrequenten Datensignale nur einen kleinen Widerstand darstellt, wird die Ader der Busleitung, in der der geöffnete Schalter liegt, wechselstrommäßig ebenfalls mit dem ASI-Bussystem verbunden, so daß die Symmetrie auch bei nicht leitendem Schalter wieder hergestellt ist.

Beim Abschalten des Aktuators muß die in seiner Spule, beispielsweise einer Magnetspule, gespeicherte Energie abgebaut werden. Die Ableitung über eine Diode oder eine Kombination aus Diode und Zenerdiode, die parallel zur Aktuatorspule geschaltet ist (vergleiche Fig. 2), ist nicht möglich, da zum einen die Kapazität der Dioden eine unzulässige Belastung des ASI-Busses darstellen würde und andererseits wegen des Fehlens der Kombination aus Drosseln und Elektrolytkondensatoren beim Öffnen des Schalters ein unzulässiger di/dt-Wert entstehen würde, weil der Spulenstrom zu diesem Zeitpunkt plötzlich und schlagartig von der Busleitung auf die Dioden umgeleitet würde. Die in der Induktivität des Aktuators gespeicherte Energie muß beim Abschalten über eine Diode in die Busleitung abfließen. Anstelle der Schutzdioden, die der Last parallel liegen, wird gemäß einer Ausführungsform der Erfindung eine Zenerdiode verwendet, die dem Schalter parallel gelegt ist. Nach dem Öffnen des Schalters fließt der Spulenstrom langsam abnehmend durch die Zenerdiode, deren Durchbruchspannung vorzugsweise über der maximal vorkommenden auf der Busleitung auftretenden Spannung liegen sollte.

Bei Auftreten eines Kurzschlusses in oder hinter dem Aktuator sollte dadurch das übrige Bussystem und insbesondere die Signal- und Datenübertragung, die über das Bussystem führt, nicht gestört werden. Das heißt, auch die Symmetrie eines zweiadrigen Bussystems sollte nicht beeinträchtigt werden. Eine Kurzschlußstrombegrenzung bzw. - abschaltung ist bei herkömmlichen Anwendermodulen bereits üblich. Gemäß einer vorteilhaften Ausgestaltung der Erfindung wird daher die Busleitung bei Auftreten eines Kurzschlusses sowohl gleichstrom- als auch wechselstrommäßig unterbrochen. Die wechselstrommäßige Unterbrechung ist insbesondere dann erforderlich, wenn der Schalter wechselstrommäßig überbrückt wird, weil dadurch verhindert wird, daß die Datensignale kurzgeschlossen werden.

Die gestellte Aufgabe wird auch durch eine Schaltungsanordnung der eingangs genannten Art gelöst, bei der erfindungsgemäß die Induktivität des Aktuators als Drossel für die Entkopplung vorgesehen ist. Die im Zusammenhang mit dem erfindungsgemäßen Verfahren beschriebenen Vorteile gelten auch für die erfindungsgemäße Schaltungsanordnung.

Vorzugsweise ist die Busleitung eine zweiadrige symmetrische Busleitung. In wenigstens einer der Adern der Busleitung ist ein Schalter vorgesehen. Dem Schalter ist vorzugsweise eine Kapazität parallel gelegt, um eine wechselstrommäßige Überbrückung des Schalters zu erreichen und Unsymmetrien im Bussystem zu vermeiden. Die Kapazität kann dabei klein und in Form eines kostengünstigen Keramik-Kondensators realisiert sein, der für die hochfrequenten Datensignale nur eine kleinen Widerstand darstellt.

Gemäß einer weiteren sehr vorteilhaften Ausgestaltung der Erfindung ist dem Schalter eine Diode parallel gelegt. Wie dies bereits ausgeführt wurde, sind damit Schutzdioden herkömmlicher Schaltungsanordnungen, die dem Aktuator parallel gelegt werden müssen, entbehrlich. Vorzugsweise ist die Diode eine Zenerdiode, deren Durchbruchspannung größer als die größte auf der Busleitung auftretende Spannung ist. Bei Öffnen des Schalters fließt daher der Spulenstrom, der durch die in der Induktivität des Aktuators gespeicherte Energie gebildet wird, langsam abnehmend durch die Zenerdiode.

Als Schalter ist die Verwendung eines Relaisschalters möglich. Besonders vorteilhaft ist jedoch die Verwendung eines Transistors und insbesondere eines MOSFET-Transistors. Zusätzlich zum Kostenvorteil bei Verwendung eines Transistors anstelle eines Relaisschalters werden dadurch auch die durch die Relaisspule verursachten hohen di/dt-Werte vermieden. Die Verwendung eines MOSFET-Transistors hat auf Grund der ihm inhärenten Zenerdiode den Vorteil, auf eine solche als Einzelbauteil ganz verzichten zu können.

Wie bereits zuvor erläutert wurde, ist es bei Auftreten eines Kurzschlusses am oder hinter dem Anwendermodul erforderlich, die Auswirkungen des Kurzschlusses von dem restlichen Bussystem und insbesondere deren Datenübertragung fernzuhalten. Da insbesondere bei der erfindungsgemäßen Ausführungsform der Schaltung mit einem dem Schalter parallel liegenden Kondensator die Datensignale bei Kurzschluß über diesen am Schalter vorbei gelangen und daher auch kurzgeschlossen werden, ist gemäß einer weiteren Ausführungsform der Erfindung je ein Kurzschlußschalter in jeder Ader der Busleitung vorgesehen, die, beispielsweise in Form von Relaiskontakten, eine Datenentkopplung zur Aufrechterhaltung der Symmetrie ermöglichen.

Gemäß einer alternativen, vorteilhaften Ausführungsform der Erfindung ist statt der Kurzschlußschalter in jeder Ader der Busleitung eine Induktivität zur Unterbrechung der Wechselstromverbindung bei Kurzschluß vorgesehen. Die gleichstrommäßige Unterbrechung bei Kurzschluß wird dabei durch das Versetzen des Schalters in den nichtleitenden Zustand bewirkt. Dabei ist es vorteilhaft, wenn die Kurzschlußdrosseln in den beiden Adern jeweils dieselbe Induktivität aufweisen, die im gleichstromdurchflossenen Zustand, also im normalen Betrieb, wenn kein Kurzschluß auftritt, vorzugsweise sehr klein und auch Null sein kann. Die Kurzschlußdrosseln sind daher vorzugsweise so ausgebildet oder gewählt, daß sie schon bei sehr kleinen Gleichströmen in die Sättigung gelangen. Sehr vorteilhaft ist es dabei, daß der ohmsche Widerstand der Kurzschlußdrosseln möglichst klein ist. Derartige Kurzschlußdrosseln können daher hinsichtlich ihres Volumens sehr klein und um mindestens eine Größenordnung kleiner und damit entsprechend kostengünstiger sein als die bei der herkömmlichen Schaltungsanordnung verwendeten Drosseln in den Bus-Adern.

Wie zuvor ausgeführt wurde, ergeben sich mit dem erfindungsgemäßen Verfahren und der erfindungsgemäßen Schaltungsanordnung sehr kostengünstige Möglichkeiten, Aktuatoren an das Bussystem anzuschließen und über dieses anzusteuern. Eine dafür vorgesehene erfindungsgemäße Schaltung erfordert lediglich einen Transistor als Schalter und einen kostengünstigen Keramikkondensator im Gegensatz zu herkömmlichen Schaltungen, bei denen zwei Drosseln, ein Elektrolytkondensator, ein Relais oder auch ein Transistor und zusätzliche Kontaktschutzdioden erforderlich sind.
Die erfindungsgemäße Schaltungsanordnung ist insbesondere im Zusammenhang mit einem ASI-Bussystem von Vorteil.

Die Erfindung wird nachstehend anhand von Ausführungsbeispielen erläutert. Es zeigen:
- Fig. 1: ein Ausführungsbeispiel für eine erfindungsgemäße Schaltungsanordnung in schematischer Darstellung;
- Fig. 2: eine herkömmliche Schaltungsanordnung mit einem Anwendermodul eines ASI-Bussystemes in schematischer Darstellung;
- Fig. 3: eine Ausführungsform der erfindungsgemäßen Schaltungsanordnung mit Maßnahmen zur gleichstrom- und wechselstrommäßigen Unterbrechung der Busleitung bei Auftreten eines Kurzschlusses und
- Fig. 4: eine weitere vorteilhafte Ausführungsform der erfindungsgemäßen Schaltungsanordnung für die gleichstrom- und wechselstrommäßige Unterbrechung der Busleitung bei Auftreten eines Kurzschlusses.

Bei der in Fig. 1 dargestellten Ausführungsform der erfindungsgemäßen Schaltung werden die in Fig. 2 verwendeten Bezugszeichen für dieselben Teile benutzt.

Die Induktivität des Aktuators, beispielsweise die Spule 1 eines Hub- oder Ventilmagneten, ist mit einem Anschluß über den Leiter 12 und den Schalter 6 mit der Plus-Ader 2 der Busleitung und mit dem anderen Anschluß über den Leiter 13 direkt mit der Minus-Ader 3 der Busleitung eines ASI-Bussystems verbunden. Dem Schalter 6 liegt ein Kondensator 10 parallel, der beispielsweise ein Keramikkondensator ist und eine kleine Kapazität darstellt. Der Kondensator 10 schafft eine Wechselstromverbindung zum Leiter 12, so daß die Symmetrie des Bussystems auch bei geöffnetem Schalter 6 gewährleistet ist.

Dem Schalter 6 liegt weiterhin eine Zenerdiode 11 parallel, wobei deren Anode mit dem Anschluß der Spule 1 und deren Kathode mit der Plus-Ader 2 der Busleitung verbunden ist. Bei Öffnen des Schalters 6 wird die in der Spule 1 gespeicherte Energie durch einen langsam abnehmenden Strom über die Zenerdiode 11 abgebaut. Die bei herkömmlichen Schaltungen erforderlichen, der Spule 1 parallel liegenden Schutzdioden 8, 9 (vergleiche Fig. 2) sind daher entbehrlich.

Bei der erfindungsgemäßen Schaltungsanordnung sind Entkopplungsdrosseln für das Entkoppeln der Datensignale und der Versorgungsspannung im Anwendermodul nicht erforderlich, weil dies erfindungsgemäß die Induktivität des Aktuators bewirkt. Darüber hinaus ist auch der in herkömmlichen Schaltungsanordnungen dieser Art erforderliche Elektrolytkondensator 7 (vergleiche Fig. 2), der dort zur Begrenzung der di/dt-Werte beim Ein- und Ausschalten des Aktuators benötigt wird, nicht erforderlich, so daß die erfindungsgemäße Schaltungsanordnung bei gleicher Funktionsweise wesentlich weniger aufwendig ist.

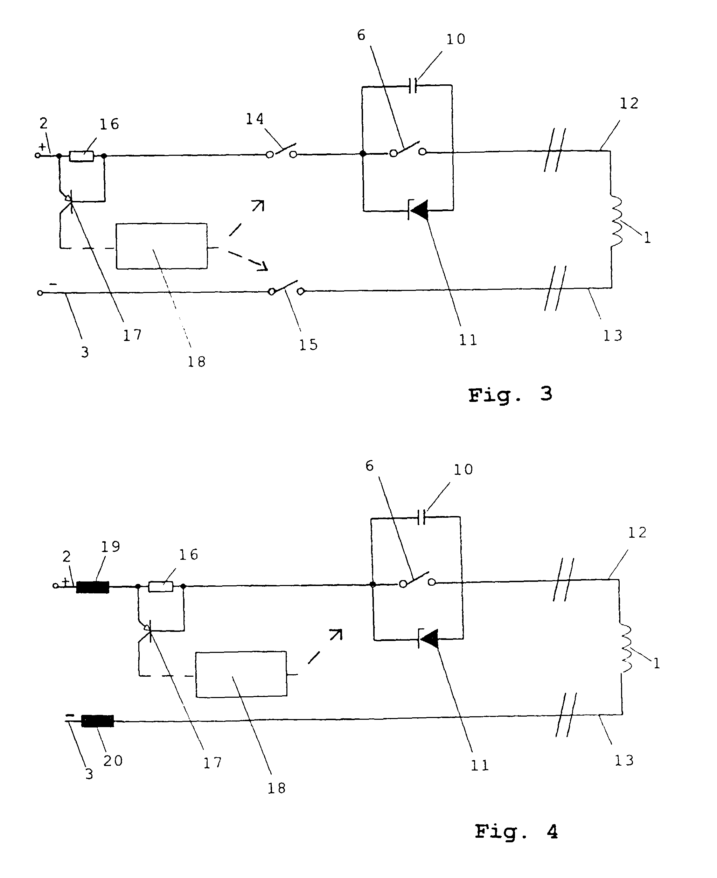

Bei der in Fig. 3 dargestellten Ausführungsform ist sowohl in der Plus-Ader 2 der Busleitung, als auch in der Minus-Ader 3 der Busleitung jeweils ein Kurzschlußschalter 14 bzw. 15 vorgesehen. Bei Auftreten eines Kurzschlusses in der Busleitung oder im Anwendermodul wird dies durch Abgriff an einem Widerstand 16 festgestellt und die abgegriffene Spannung über einen Transistor 17 einem Speicher 18 zugeleitet, dessen Ausgangssignal die Kurzschlußschalter 14, 15 bei Auftreten eines Kurzschlusses in den nicht leitenden Zustand versetzt. Auf diese Weise ergibt sich sowohl eine gleichstrommäßige als auch eine wechselstrommäßige Unterbrechung, so daß das übrige Bussystem durch den Kurzschluß in seiner Funktion nicht beeinträchtigt wird und insbesondere die für die Datenübertragung erforderliche Symmetrie des Bussystems erhalten bleibt.

Eine sehr vorteilhafte, kostengünstige Ausführungsform der Schaltungsanordnung ist in Fig. 4 gezeigt. Bei Auftreten eines Kurzschlusses hinter dem oder im Anwendermodul wird dies wiederum durch Abgriff am Widerstand 16 festgestellt. Die Abgriffspannung gelangt wie bei der in Fig. 3 dargestellten Ausführungsform über einen Transistor 17 zu einem Speicher 18, dessen Ausgangssignal den Schalter 6, der ohnehin für das An- und Abschalten des Aktuators vorgesehen ist, in den nichtleitenden Zustand versetzt, so daß dadurch eine gleichstrommäßige Unterbrechung bei Kurzschluß erreicht wird. Da der Schalter 6 jedoch wechselstrommäßig durch den Kondensator 10 überbrückt ist und ein wechselstrommäßiger Kurzschluß, d.h. ein Kurzschluß der Datensignale dennoch vorhanden ist, muß für eine wechselstrommäßige Unterbrechung Sorge getragen werden. Dies wird gemäß dieser in Fig. 4 dargestellten Ausführungsform der erfindungsgemäßen Schaltung dadurch bewirkt, daß sowohl in die Plus-Ader 2 der Busleitung, als auch in der Minus-Ader 3 der Busleitung eine Kurzschlußdrossel 19 bzw. 20 gelegt ist. Die Kurzschlußdrosseln 19, 20 weisen vorzugsweise die gleiche Induktivität auf und müssen jedoch nur im gleichstromlosen Zustand, also bei Auftreten eines Kurzschlusses und eines offenen Schalters 6, ihre Induktivität zur wechselstrommäßigen Unterbrechung wirksam haben. Im normalen Betrieb, wenn also kein Kurzschluß auftritt, der Schalter 6 geschlossen ist und daher die Kurzschlußdrosseln 19, 20 gleichstromdurchflossen sind, kann der Wert der Induktivität dieser Kurzschlußdrosseln 19, 20 sehr klein oder auch Null sein. Das heißt, es können sehr kleine Drosseln verwendet werden, die schon bei sehr kleinen durch sie fließenden Gleichströmen in die Sättigung gelangen. Es ist lediglich darauf Wert zu legen, den ohmschen Widerstand der Kurzschlußdrosseln 19, 20 klein und damit Leistungsverluste möglichst gering zu halten. Das Volumen der Kurzschlußdrosseln 19, 20 ist daher um mindestens eine Größenordnung geringer als bei den in der bekannten Schaltungsanordnung verwendeten Drosseln 4, 5. Dementsprechend sind auch die Kosten für die Kurzschlußdrosseln 19, 20 wesentlich geringer.

## Patentansprüche

1. Verfahren zum Anschließen wenigstens eines Aktuators über ein die für den Aktuator bestimmten Daten in Steuersignale umwandelndes Anwendermodul an eine Busleitung, die sowohl zur Versorgung des Aktuators mit Betriebsenergie als auch für die Datenübertragung vorgesehen ist, wobei die eine Wechselspannung bildenden Datensignale und die Betriebsgleichspannung mit wenigstens einer Drossel voneinander entkoppelt werden,
**dadurch gekennzeichnet,** daß die Induktivität des Aktuators als Entkopplungsdrossel verwendet wird.

2. Verfahren nach Anspruch 1, dadurch gekennzeichnet, daß die Busleitung eine symmetrische zweiadrige Busleitung ist und ein Schalter wechselstrommäßig überbrückt wird.

3. Verfahren nach Anspruch 1 oder 2, dadurch gekennzeichnet, daß die in der Induktivität des Aktuators gespeicherte Energie beim Abschalten des Aktuators über eine dem Schalter parallelgeschaltete Diode fließt.

4. Verfahren nach einem der vorhergehenden Ansprüche, dadurch gekennzeichnet, daß die Busleitung bei Auftreten eines Kurzschlusses sowohl gleichstrom- als auch wechselstrommäßig unterbrochen wird.

5. Schaltungsanordnung zur Durchführung des Verfahrens nach einem der vorhergehenden Ansprüche, bestehend aus wenigstens einem Aktuator und einem die für den Aktuator bestimmten Daten in Steuersignale umwandelnden Anwendermodul, wobei der Aktuator über das Anwendermodul an eine Busleitung (2, 3) angeschlossen ist, die sowohl zur Versorgung des Aktuators mit Betriebsenergie als auch für die Datenübertragung vorgesehen ist, mit wenigstens einer Drossel zur gegenseitigen Entkopplung der eine Wechselspannung bildenden Datensignale und der Betriebsgleichspannung,
**dadurch gekennzeichnet,** daß die Induktivität (1) des Aktuators als Entkopplungsdrossel vorgesehen ist.

6. Schaltungsanordnung nach Anspruch 5, dadurch gekennzeichnet, daß die Busleitung (2, 3) eine zweiadrige symmetrische Busleitung ist.

7. Schaltungsanordnung nach Anspruch 5 oder 6, dadurch gekennzeichnet, daß in wenigstens einer Ader (2, 3) der Busleitung ein Schalter (6) angeordnet ist.

8. Schaltungsanordnung nach einem der Ansprüche 5 bis 7, dadurch gekennzeichnet, daß dem Schalter (6) ein Kondensator (10) parallel liegt.

9. Schaltungsanordnung nach einem der Ansprüche 5 bis 8, dadurch gekennzeichnet, daß dem Schalter (6) eine Zenerdiode (11) parallel liegt.

10. Schaltungsanordnung nach Anspruch 9, dadurch gekennzeichnet, daß die Durchbruchspannung der Zenerdiode (11) größer als die größte auf der Busleitung auftretende Spannung ist.

11. Schaltungsanordnung nach einem der Ansprüche 7 bis 10, dadurch gekennzeichnet, daß der Schalter (6) ein Relais ist.

12. Schaltungsanordnung nach einem der Ansprüche 7 bis 10, dadurch gekennzeichnet, daß der Schalter (6) ein Transistor ist.

13. Schaltungsanordnung nach Anspruch 12, dadurch gekennzeichnet, daß der Transistor ein MOSFET ist.

14. Schaltungsanordnung nach einem der Ansprüche 5 bis 13, dadurch gekennzeichnet, daß je ein Kurzschlußschalter (14, 15) in jeder Ader (2, 3) der Busleitung vorgesehen ist.

15. Schaltungsanordnung nach einem der Ansprüche 5 bis 13, dadurch gekennzeichnet, daß der Schalter (6) bei Auftreten eines Kurzschlusses in den nichtleitenden Zustand gebracht wird und in beiden Adern (2, 3) der Busleitung je eine Drossel (19, 20) zur Unterbrechung der Wechselstromverbindung bei Kurzschluß vorgesehen ist.

16. Schaltungsanordnung nach Anspruch 15, dadurch gekennzeichnet, daß die Kurzschlußdrosseln (19, 20) in den beiden Adern (2, 3) dieselbe Induktivität aufweisen.

17. Schaltungsanordnung nach Anspruch 15 oder 16, dadurch gekennzeichnet, daß die Kurzschlußdrosseln (19, 20) im gleichstromdurchflossenen Zustand eine sehr kleine Induktivität aufweisen.

18. Schaltungsanordnung nach Anspruch 15 bis 17, dadurch gekennzeichnet, daß die Kurzschlußdrosseln (19, 20) einen kleinen ohmschen Widerstand aufweisen.

19. Schaltungsanordnung nach einem der Ansprüche 5 bis 18, dadurch gekennzeichnet, daß die Busleitung (2, 3) eine Aktuator-Sensor-Interface-Busleitung ist.

## Claims

1. Process for connecting at least one actuator, by way of an application module which converts specific data for the actuator into control signals, to a bus line which is provided both for supplying the actuator with operating energy and also for transmitting data, wherein the data signals, which form an alternating current voltage, and the operating direct current voltage are decoupled from each other by at least one impedance,
characterised in that the inductance of the actuator is used as a decoupling impedance.

2. Process according to claim 1, characterised in that the bus line is a symmetrical two-core bus line and a switch is by-passed by the alternating current.

3. Process according to claim 1 or 2 characterised in that upon switching off the actuator the energy stored in the inductance of the actuator flows via a diode connected in parallel to the switch.

4. Process according to any one of the preceding claims, characterised in that in the event of a short circuit the bus line is interrupted both with regard to direct current and also with regard to alternating current.

5. Circuit arrangement for performing the process according to any of the preceding claims, consisting of at least one actuator and an application module which converts specific data for the actuator into control signals, wherein the actuator is connected via the application module to a bus line (2,3) which is provided both for supplying the actuator with operating energy and also for transmitting the data, having at least one impedance for the purpose of mutually decoupling the data signals, which form an alternating current voltage, and the operating direct current voltage,
characterised in that the inductance (1) of the actuator is provided as a decoupling impedance.

6. Circuit arrangement according to claim 5, characterised in that the bus line (2,3) is a two-core symmetrical bus line.

7. Circuit arrangement according to claim 5 or 6, characterised in that a switch (6) is disposed in at least one core (2,3) of the bus line.

8. Circuit arrangement according to any one of the claims 5 to 7, characterised in that a capacitor (10) lies parallel to the switch (6).

9. Circuit arrangement according to any one of claims 5 to 8, characterised in that a Zener diode (11) lies parallel to the switch (6).

10. Circuit arrangement according to claim 9, characterised in that the breakdown voltage of the Zener diode (11) is greater than the highest voltage which occurs on the bus line.

11. Circuit arrangement according to any one of claims 7 to 10, characterised in that the switch (6) is a relay.

12. Circuit arrangement according to any one of claims 7 to 10, characterised in that the switch (6) is a transistor.

13. Circuit arrangement according to claim 12, characterised in that the transistor is a MOSFET.

14. Circuit arrangement according to any one of claims 5 to 13, characterized in that a short circuit switch (14, 15) is provided in each core (2,3) respectively of the bus line.

15. Circuit arrangement according to any one of the claims 5 to 13, characterised in that in the event of a short circuit the switch (6) is rendered non-conductive and in each case an impedance (19,20) is provided in both cores (2,3) of the bus line for the purpose of interrupting the alternating current connection in the event of a short circuit.

16. Circuit arrangement according to claim 15, characterised in that the short circuit impedances (19,20) have the same inductance in the two cores (2,3).

17. Circuit arrangement according to claim 15 or 16, characterised in that the short circuit impedances (19,20) have an extremely low inductance when the direct current is flowing through.

18. Circuit arrangement according to claim 15 to 17, characterised in that the short circuit impedances (19,20) comprise a small ohmic resistance.

19. Circuit arrangement according to any one of claims 5 to 18, characterised in that the bus line (2,3) is an actuator-sensor-interface bus line.

## Revendications

1. Procédé destiné à connecter au moins un actionneur, par un module utilisateur qui convertit les données destinées à l'actionneur en signaux de commande, à un bus qui est prévu tant pour alimenter l'actionneur en énergie de service que pour transmettre les données, les signaux de données qui forment une tension alternative et la tension continue de service étant désaccouplés les uns de l'autre par au moins une bobine, caractérisé en ce que l'inductance de l'actionneur est utilisée comme enroulement de découplage.

2. Procédé selon la revendication 1, caractérisé en ce que le bus est un bus symétrique à deux conducteurs, et en ce qu'un interrupteur est court-circuité en courant alternatif.

3. Procédé selon la revendication 1 ou 2, caractérisé en ce que l'énergie accumulée dans l'inductance de l'actionneur s'écoule, lors de la mise à l'arrêt de l'actionneur, par une diode montée en parallèle à l'interrupteur.

4. Procédé selon l'une des revendications précédentes, caractérisé en ce qu'en cas de court-circuit le bus est coupé aussi bien en ce qui concerne le courant continu que le courant alternatif.

5. Circuit pour la mise en oeuvre du procédé selon l'une des revendications précédentes, constitué d'au moins un actionneur et d'un module utilisateur qui convertit les données destinées à l'actionneur en signaux de commande, l'actionneur étant connecté, par le module utilisateur, à un bus (2, 3) qui est prévu tant pour alimenter l'actionneur en énergie de service que pour transmettre les données, avec au moins une bobine pour le découplage réciproque des signaux de données qui forment une tension alternative et de la tension continue de service, caractérisé en ce que l'inductance (1) de l'actionneur est prévue comme enroulement de découplage.

6. Circuit selon la revendication 5, caractérisé en ce que le bus (2, 3) est un bus symétrique à deux conducteurs.

7. Circuit selon la revendication 5 ou 6, caractérisé en ce qu'un interrupteur (6) est monté dans au moins un conducteur (2, 3) du bus.

8. Circuit selon l'une des revendications 5 à 7, caractérisé en ce qu'un condensateur (10) est monté en parallèle à l'interrupteur (6).

9. Circuit selon l'une des revendications 5 à 8, caractérisé en ce qu'une diode Zener (11) est montée en parallèle à l'interrupteur (6).

10. Circuit selon la revendication 9, caractérisé en ce que la tension de claquage de la diode Zener (11) est supérieure à la tension maximale survenant dans le bus.

11. Circuit selon l'une des revendications 7 à 10, caractérisé en ce que l'interrupteur (6) est un relais.

12. Circuit selon l'une des revendications 7 à 10, caractérisé en ce que l'interrupteur (6) est un transistor.

13. Circuit selon la revendication 12, caractérisé en ce que le transistor est un MOSFET.

14. Circuit selon l'une des revendications 5 à 13, caractérisé en ce qu'un interrupteur à court-circuit (14, 15) est prévu dans chaque conducteur (2, 3) du bus.

15. Circuit selon l'une des revendications 5 à 13, caractérisé en ce qu'en cas de court-circuit l'interrupteur (6) est amené dans l'état non conducteur et dans chacun des deux conducteurs (2, 3) du bus est prévue un enroulement (19, 20) pour interrompre la liaison en courant alternatif en cas de court-circuit.

16. Circuit selon la revendication 15, caractérisé en ce que les enroulements de court-circuit (19, 20) présentent la même inductance dans les deux conducteurs (2, 3).

17. Circuit selon la revendication 15 ou 16, caractérisé en ce que les enroulements de court-circuit (19, 20) présentent une très petite inductance lorsqu'elles sont traversées par un courant continu.

18. Circuit selon les revendications 15 à 17, caractérisé en ce que les enroulements de court-circuit (19, 20) présentent une petite résistance pure.

19. Circuit selon l'une des revendications 5 à 18, caractérisé en ce que le bus (2, 3) est un bus d'interface actionneur-capteur.
